Europäisches Patentamt

European Patent Office

Office européen des brevets

(19)

(11) Publication number: 0 333 473
A2

# (12) EUROPEAN PATENT APPLICATION

(21) Application number: 89302602.1

(22) Date of filing: 16.03.89

(51) Int. Cl.⁴: C 09 K 7/02

(30) Priority: 17.03.88 JP 61881/88

(43) Date of publication of application:
20.09.89 Bulletin 89/38

(84) Designated Contracting States: DE FR GB

(71) Applicant: MITSUI-CYANAMID, LTD.
3-13 Toranomon 2-chome Minato-ku
Tokyo (JP)

(72) Inventor: Itoda, Hiroshi c/o Mitsui-Cyanamid, Ltd.
Ofuna Technical Lab. 1190 Kasama-cho Sakae-ku
Yokohama-shi Kanagawa (JP)

Watanabe, Naotaka
c/o Mitsui-Cyanamid, Ltd. 3-13 Toranomon 2-chome
Minato-ku Tokyo (JP)

Hosoya, Yoshio
c/o Mitsui-Cyanamid, Ltd. 3-13 Toranomon 2-chome
Minato-ku Tokyo (JP)

Tamura, Akira
c/o Mitsui-Cyanamid, Ltd. 3-13 Toranomon 2-chome
Minato-ku Tokyo (JP)

(74) Representative: Stuart, Ian Alexander et al
MEWBURN ELLIS & CO. 2/3 Cursitor Street
London EC4A 1BQ (GB)

(54) Micro-tunnelling method.

(57) A micro-tunnelling method in which the tunnelling friction is reduced by injecting an aqueous dispersion of a water-in-oil type water-swelling polymer emulsion into the clearance between the tunnelling pipe and the ground.

EP 0 333 473 A2

**Description**

# MICRO-TUNNELLING METHOD

This invention relates to a micro-tunnelling method (a jacking method) in which tunnelling friction is reduced by injecting a water-in-oil type water-swelling polymer emulsion into the clearance between a micro-tunnelling pipe and the ground.

Description of the Background Art

In the laying of small diameter pipes for use in sewage systems and the like it has been the practice to use a tunnelling method wherein the tunnelling pipe is progressively pushed ahead as the bit moves forward.

For reducing the friction between the tunnelling pipe and the wall of the drill hole when this method is used, there has been used an antifriction agent such as bentonite, organic paste, surface active agent, mineral oil or the like.

It is also known to employ a liquid dispersion of highly water absorbent hydrogel and, if required, an aqueous suspension comprising mineral oil, organic paste, surface active agent and oils (Japanese Patent Public Disclosure No. 55(1980) 75483).

There has also been disclosed a micro-tunnelling method which takes advantage of a bearing action provided by elastic spheres formed when a highly water absorbent high polymer absorbs water (Japanese Patent Public Disclosure No. 58(1983)-27774).

The method described in the aforesaid Public Disclosure No. 55(1980)-75483 is disadvantageous because preparation of the antifriction composition requires the blending of various different agents and is thus complex and time consuming.

On the other hand, the highly water absorbent high polymer used in the method set out in the aforesaid Public Disclosure No. 58(1983)-27774 is initially in the form of a powder and is thus liable to fly into the air and degrade the working environment at the time the aqueous dispersion is prepared.

Moreover, use of an aqueous dispersion containing only a highly water absorbent high polymer makes it difficult to carry out viscosity adjustment or prepare aqueous dispersions for specific ground layer conditions. Another problem is the large diameter of the particles which, depending on the nature of the ground layer, may cause plugging and increase the load during injection to the point where injection becomes difficult or impossible.

Preferred embodiments of the present invention ameliorate or overcome the drawbacks of the background art. The invention providing a micro-tunnelling method wherein the tunnelling friction is reduced by injecting an aqueous dispersion of a water-in-oil (w/o) type water-swelling polymer emulsion into the clearance between the tunneling pipe and the ground.

In a preferred micro-tunnelling method of the aforesaid type w/o type water-swelling polymer emulsion contains water-insoluble water-swelling high polymer particles of a mean diameter of not more than 10 μm and is formed by emulsifying and radical polymerizing in a nonaqueous solvent comprising a hydrophobic surface active agent at least one ethylenic unsaturated monomer (vinyl monomer) and at least one crosslinkable monomer and adding a hydrophilic surface active agent to the result.

In preferred embodiments, when the w/o type water-swelling polymer emulsion is dispersed in water, a synergistic effect between the minute hydrogel spheres which form when the polymer particles absorb water and the minute micelles formed by the oil works to produce an increased lubrication effect.

Moreover, the aqueous dispersion assumes the state of a viscous paste, which makes it easy to inject and inhibits its escape into ground water or other ambient water.

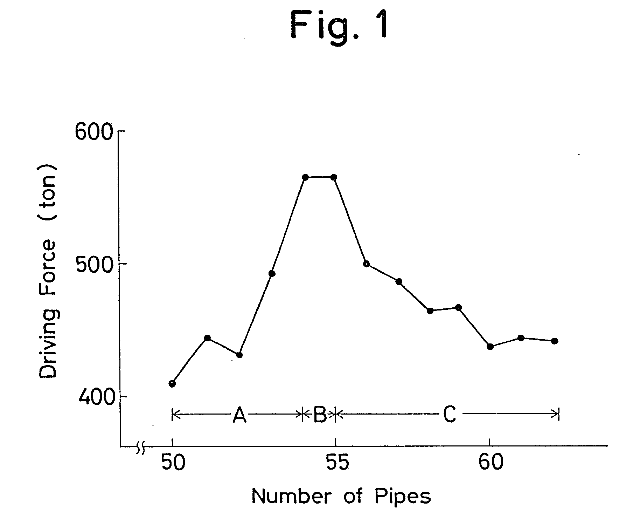

A preferred embodiment will be described with reference to the accompanying drawing, in which Fig. 1 is a graph showing the results obtained in an example using the micro-tunnelling method of the present invention.

The w/o type water-swelling polymer emulsion contains polymer particles formed by preparing an aqueous solution of a water soluble vinyl monomer and a crosslinkable monomer, dispersing the aqueous solution in an organic dispersive medium by use of a hydrophobic surface active agent, and allowing a radical polymerization reaction to proceed between the vinyl monomer and the crosslinkable monomer.

As the water soluble vinyl monomer there can be used (1) nonionic vinyl monomer, (2) anionic vinyl monomer or (3) cationic vinyl monomer.

Among usable nonionic vinyl monomers (1) can be mentioned acrylamide, methacryl amide, vinylmethylether, vinylethylether, vinylpyrolidone and the like.

As the anionic vinyl monomer (2), there can be used acrylic acid, methacrylic acid, 2-acrlylamide-2-methylpropanesulfonic acid, vinylsulfonic acid, styrene sulfonic acid, itaconic acid, maleic acid, fumaric acid, arylsulfonic acid and the like.

As the cationic vinyl monomer (3), there can be used, for example, (a) neutral salts and quaternary ammonium salts of dialkylaminoalkyl methacrylates or acrylates such as dimethylaminoethyl acrylate, dimethylaminoethyl methacrylate, diethylaminoethyl acrylate and diethylaminoethyl methacrylate, and (b) dialkylaminoalkyl methacrylamides or acrylamides such as dimethylaminomethyl acrylamide, dimethylaminoethyl methacrylamide, dimethylaminopropyl acrylamide and dimethylaminopropyl methacrylamide.

As the crosslinkable monomer there is used one which is capable of copolymerization with water soluble vinyl monomer. Specific examples are such divinyl compounds as N,N'-methylenebis acrylamide, N,N'-methylenebis methacrylamide, divinylbenzen vinyl acrylate, and vinyl methacrylate, such vinyl type methylol compounds as methylol acrlylamide and methylol methacrylamide, such vinylaldehyde compounds as acrolein, and also methylacrylamide glycolatemethylether. These can be produced by the methods described in Japanese Patent Public Disclosure No. 63(1988)-90510, for example.

The properties of the emulsion obtained in the aforementioned manner will now be explained. The emulsion is produced by preparing an aqueous solution of one or more water soluble vinyl monomers and a crosslinkable monomer, dispersing the aqueous solution in an organic dispersive medium using a hydrophobic surface active agent and thereafter allowing radical polymerization reaction to proceed. It is composed of 25 - 75 wt% polymer particles, 20 - 50 wt% organic dispersive medium, 0.5 - 5 wt% hydrophobic surface active agent (preferably at an HLB (hydrophilic-lipophilic balance) of 3 - 6), and 0 - 5 wt% hydrophilic surface active agent (preferably at an HLB of not less than 10).

The polymer particles of the emulsion prepared in this manner have a mean diameter of not more than 10 μm and in particular include particles having a mean diameter of 2 - 6 μm. The viscosity of the emulsion is about 300 - 800 cps.

An aqueous dispersion of this emulsion is used in the micro-tunnelling method according to the present invention. The content of the emulsion in the aqueous dispersion is about 1.5 - 2.5 wt%.

The aqueous dispersion is prepared by pouring a prescribed amount of the emulsion into water in a blending tank, preferably with stirring. The dispersion is ready for injection to the tunnelling pipe about 5 - 10 minutes after the emulsion is poured into the tank.

The injection operation is completed when the aqueous dispersion of the emulsion is injected to the tunnelling pipe using a pump.

The special features attainable by preferred embodiments of this invention are:

(1) Good operability owing to the fact that the anti-friction composition is of the single liquid type;

(2) Being of liquid type, the antifriction composition does not produce dust and thus enables preservation of a good working environment;

(3) No lumps are produced at the time of dissolution;

(4) The viscosity of the antifriction composition can be adjusted easily and the mixing ratio can be easily matched to the nature of the ground; and

(5) The micro-tunnelling operation can be conducted using only simple equipment for preparing the antifriction composition.

EXAMPLES

Examples of preparing the w/o type water-swelling polymer emulsion according to this invention will first be given.

Preparation Example 1

18 g of sorbitan monooleate (HLB: 4.3) was added to 0.15 g of N,N'-methylenebisacrylamide, 683 g of a 54 % aqueous solution of 100 mole% ammonia neutralized acrylic acid and 240 g by weight of an organic dispersive medium, and the mixture was emulsified in a homogenizer.

The resulting emulsion was transferred to a four-mouth flask and, under stirring, was purged of air using N₂ gas. Concurrently with the N₂ gas purging, a radical polymerization catalyst was added to the emulsion dropwise and polymerization was carried out at 60 °C.

Upon completion of the polymerization, 27 g of polyoxyethylenelaurylether (HLB: 12.1) was added with stirring. The viscosity of the so-obtained emulsion was found to be 330 cps/25 °C (measured by a B-type viscometer, No. 2 rotor, 12 rpm) and the mean particle diameter was 3.8 μm.

Preparation Example 2

An emulsion was prepared in a manner similar to Preparation Example 1 except that 0.07 g of vinyl acrylate was used as the crosslinkable monomer, 537 g of a 41.6 % aqueous solution of acrylamide was used as the water soluble vinyl monomer, the amount of organic dispersive medium used was 196 g, the amount of hydrophobic surface active agent (HLB: 4.3) used was 14 g, and the amount of hydrophilic surface active agent (HLB: 12.1) used was 23 g. The so-obtained emulsion exhibited a viscosity of 310 cps/25 °C (measured by B-type viscometer, No. 2 rotor, 12 rpm) and a mean particle diameter of 3.3 μm.

Preparation Example 3

An emulsion was prepared in a manner similar to Preparation Example I except that 0.09 g of vinyl methacrylate was used as the crosslinkable monomer, 619 g of a 51 % aqueous solution of the quarternary ammonium methyl chloride salt of dimethylaminoethylmethacrylate was used as the water soluble vinyl monomer, the amount of organic dispersive medium used was 224 g, the amount of hydrophobic surface active agent (HLB: 4.3) used was 14 g, and the amount of hydrophilic surface active agent (HLB: 12.1) used was 25 g. The so-obtained emulsion exhibited a viscosity of 530 cps/25 °C (measured by a B-type viscometer, No. 2 rotor, 12 rpm) and a mean particle diameter of 5.1 μm.

The antifriction composition according to the present invention obtained in Preparation Example 1 was tested in an actual micro-tunneling operation.

The operation involved the laying of concrete tunneling pipes (interior diameter: 1500 mm, length: 2.43 m) through a wet gravel layer covered by 7 m of earth, using the conventional drilling mud tunneling method. A conventional antifriction composition (a mixture of 100 parts water, 10 parts bentonite, 4 parts mud oil, 0.2 parts carboxymethyl cellulose, and 0.2 parts HIGHGEL (a powder type highly water absorbent polymer)) was injected and the operation was continued until the limit of the effect of this composition was reached. Thereafter, a 1.8 wt% aqueous dispersion of the antifriction composition according to the present invention was injected between the tunneling pipe and the wall of the tunneling hole.

The results of this operation are graphically illustrated in Figure 1. As will be noted from this figure, the driving force reached its maximum of 584 ton when the number of tunnelling pipes reached 54(A). From the 55th pipe the amount of the conventional antifriction composition injection was doubled(B), but no reduction in the tunneling force was noted. At this point, the antifriction composition according to the present invention was injected(C), with the result that the tunnelling force fell gradually, eventually reaching as low as 434 ton and thereafter showing no tendency to increase. The method according to the present invention can thus be seen to produce a very remarkable effect.

As will be understood from the foregoing, the present invention not only improves the operability in micro-tunneling work but also greatly reduces the friction between the ground and the tunneling pipe.

## Claims

1. A micro-tunnelling method wherein the tunnelling friction is reduced by injecting an aqueous dispersion of a water-in-oil type water-swelling polymer emulsion into the clearance between the tunnelling pipe and the ground.

2. A micro-tunnelling method according to claim 1 wherein the water-in-oil type water-swelling polymer emulsion contains water-insoluble water-swelling high polymer particles of a mean diameter of not more than 10 μm and is formed by emulsifying an aqueous solution of at least one ethylenic unsaturated monomer and at least one crosslinkable monomer with a nonaqueous solvent which contains a hydrophobic surface active agent, allowing a radical polymerization reaction to proceed between said ethylenic unsaturated monomer and said crosslinkable monomer, and addint a hydrophilic surface active agent to the result.

# Fig. 1